# EUROPEAN PATENT APPLICATION

(11) **EP 1 950 073 A1**
(43) Date of publication of application: **30.07.2008**
(21) Application number: 06822566.3
(22) Date of filing: 30.10.2006
(51) Int. Cl.: B60K 11/04, B60H 1/32, B60R 16/08, B62D 25/08, F25B 41/00, F28F 9/26

(54) **RADIATOR CORE SUPPORT**

(30) Priority: 04.11.2005 JP 2005320893
(71) Applicant: Calsonic Kansei Corporation, Tokyo 164-8602 (JP)
(72) Inventor: SENSUI, Tatsuya c/o CALSONIC Kansei Corporation, Tokyo 164-8602 (JP); UEHARA, Tomoaki c/o CALSONIC Kansei Corporation, Tokyo 164-8602 (JP)
(74) Representative: Dronne, Guy
(86) International application number: PCT/JP2006/321609
(87) International publication number: WO 2007/052577

(57) **Abstract**

A radiator core support 1 has a condenser 10 which is arranged at a front side thereof, and pipes 30 and 31, of the condenser 10, vehicle-side connecting end portions of which pass through a through-hole 8 formed on the radiator core support 1 in a state where the end portions project rearward. The radiator core support 1 is provided with a bracket 40 which is capable of supporting the pipes 30 and 31 in a state where the bracket 40 blocks off gaps formed between the pipes 30 and 31 and the through-hole 8.

## Description

### [TECHNICAL FIELD]

The present invention relates to a radiator core support for supporting a radiator, which is used for a motor vehicle or the like, on a vehicle body thereof.

### [Description of the Related Art]

A conventional radiator core support supports a condenser at a front side of a motor vehicle and a radiator at a rear side thereof, and such a radiator core support is disclosed in Japanese patent application laid-open No. 2000-18874. The condenser is arranged so that a vehicle-side connecting end portion of a pipe of the condenser can pass through a through-hole formed in the radiator core support in a state where the end portion projects in a rearward of the motor vehicle.

### [DESCRIPTION OF THE INVENTION]

### [PROBLEM(S) TO BE SOLVED BY THE INVENTION]

The above-described conventional radiator core has, however, a problem in that, because of the piping work, it is awkward to connect the vehicle-side connecting end portion of the pipe of the condenser and a connecting pipe of a vehicle side device with each other, due to lack of stability thereof, because a gap may be formed between the through-hole and the pipe.
Moreover, the gap is never closed, because of the restrictions caused by mounting the condenser on the radiator core, or because of a need to allow for precision errors of the condenser and the radiator.

In addition, the conventional radiator core support has another problem in that hot air blows back from an engine side toward a front side of the condenser through the gap, resulting in deterioration in coolability of the condenser.

The present invention is made in order to solve the above-described problems, and its object is to provide a radiator core support which enables a vehicle-side end portion of a pipe of a condenser and a connecting pipe of a vehicle side device to be easily connected with each other, thus preventing hot air from blowing back from an engine side toward a front side of a condenser through a gap formed between the pipe and a through-hole formed in the radiator core support.

According to an aspect of the present invention, there is provided a radiator core support in which a condenser is arranged on a front side of the radiator core support, and a vehicle side connecting end portion of a piping of the condenser passes through a through-hole formed on the radiator core support in a state where the end portion is projected rearward therethrough. The radiator core support is provided with a bracket which is capable of holding the piping by blocking off a gap formed between the piping and the through-hole.

### [EFFECTS OF THE INVENTION]

In the radiator core support of the present invention, the radiator core support includes the condenser which is arranged on the front side of the radiator core support, and the piping of the condenser having the vehicle side connecting end portion passing through the through-hole formed on the radiator core support in the state where the end portion is projected rearward therethrough. The radiator core support is provided with the bracket which is capable of holding the piping by blocking off the gap formed between the piping and the through-hole. Therefore, the radiator core support enables the vehicle-side connecting end portion to be easily connected with a piping of a vehicle side device, and it can prevent hot air from blowing back from an engine side toward a front side of the condenser through the gap formed between the piping and the through-hole.

### [BRIEF DESCRIPTION OF THE DRAWINGS]

FIG.1 is a front perspective view showing a radiator core support, on which a condenser is mounted, of an embodiment according to the present invention;
FIG. 2 is a rear perspective view showing the radiator core support, on which the condenser is mounted, of the embodiment according to the present invention;
FIG. 3 is a front perspective view showing the radiator core support without the condenser;
FIG. 4 is a rear perspective view showing the radiator core support without the condenser;
FIG. 5 is a front perspective view showing the condenser;
FIG. 6 is a rear perspective view showing the condenser;
FIG. 7 is a schematic diagram illustrating respective flows of fluid medium flowing inside the condenser and a radiator;
FIG. 8 is an enlarged perspective front view showing a range, indicated by a circle "A" in FIG. 5, of the condenser;
FIG. 9 is an enlarged perspective rear view showing a range, indicated by a circle "B" in FIG. 6, of the condenser;
FIG. 10 is an exploded perspective view of a bracket;
FIGS. 11A and 11B are views explaining how to fix a piping in the bracket, where FIG. 11A is a view showing a state before the piping is fixed in the bracket, and FIG. 11B is a diagram showing a state where the piping is fixed in the bracket;
FIG. 12 is a front perspective view illustrating a state where the bracket is mounted; and
FIG. 13 is a rear perspective view explaining a state where the bracket is mounted.

### [Description of Reference Numbers]

D1, D2, D3, D4: partition plate
O1, O2, O3: opening portion
P: mounting pin
PI: inlet port
P2: outlet port
R1, R2, R3, R4, R5, R6: chamber
1: radiator core support
2: integrated heat exchangers
3: radiator core support upper portion
4: radiator core support lower portion
4a: fixing hole
5: radiator core support side portion
6: shroud portion
7a, 7b: opening portion
8: through-hole
9: head lamp stay
10: condenser
11: radiator
12a, 12b: condenser tank
13, 20: condenser core part
14, 21: tube
15: fin
16, 17a, 17b: connecting pipe
17: receiver
18, 19: radiator tank
20: radiator core part
21a, 21b: reinforcement
22: screw hole
23: screw
30, 31: pipe
30a, 31a: vehicle-side connecting end portion
40: bracket
41, 42; through-hole
43: elastic member
43a, 43b: divided body portion
44a, 44b: hinge portion
45a, 45b: turning portion
46: fixing hole
47: draft depressions
48: projecting portion

### [BEST MODE FOR CARRYING-OUT OF THE INVENTION]

Hereinafter, an embodiment of the present invention will be described with reference to the accompanying drawings.

### [First Embodiment]

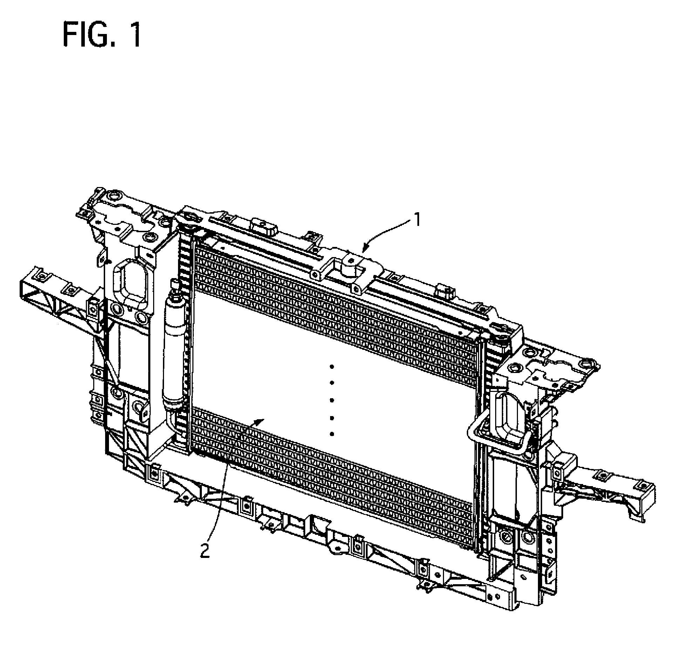

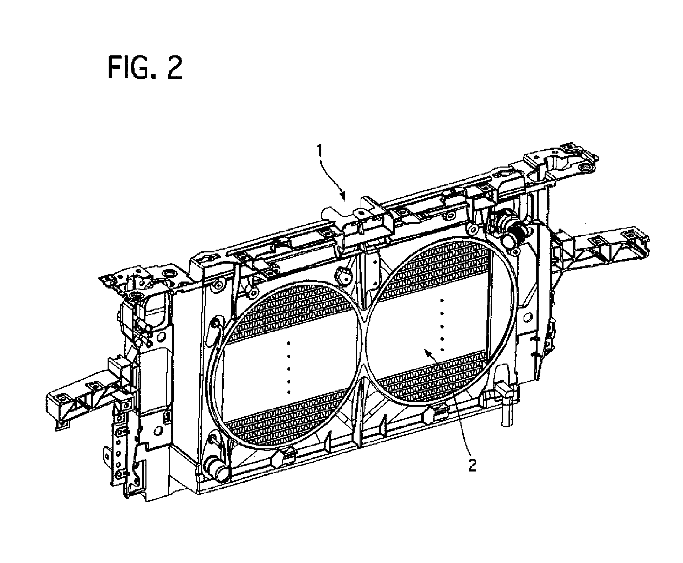

Firstly, an entire construction of a radiator core support of the embodiment will be described.
The radiator core support of the embodiment is mounted on a front portion of a vehicle body of a motor vehicle, so that it forms a part of the vehicle body.
As shown in FIG. 1 and FIG. 2, integrated heat exchangers 2, consisting of a condenser and a radiator, are mounted on the radiator core support 1.

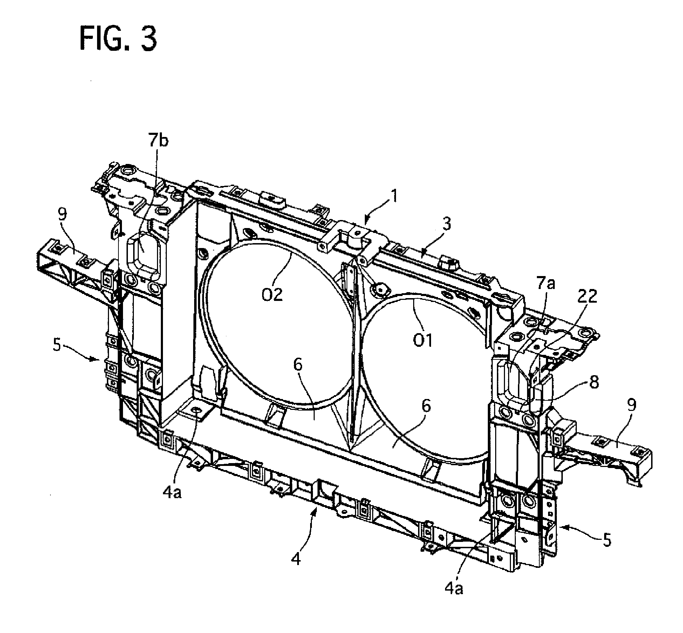

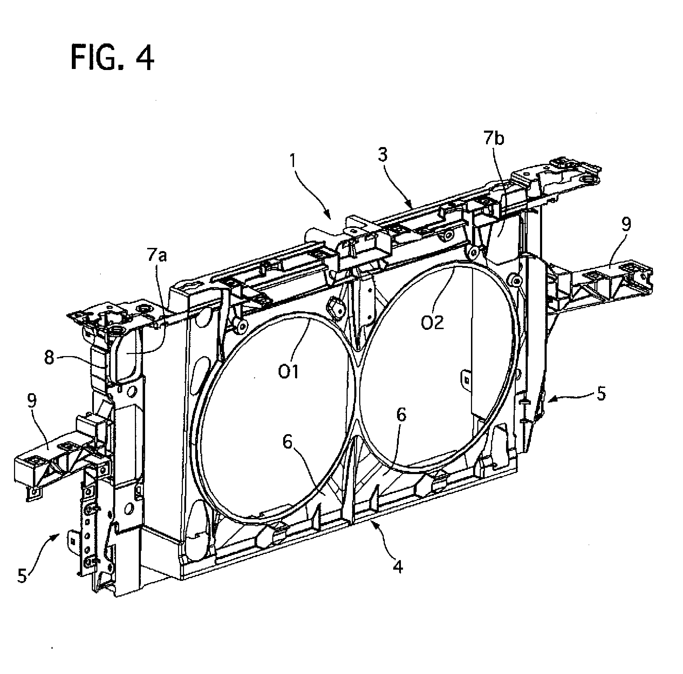

As shown in FIG. 3 and FIG. 4, the radiator core support 1 includes a radiator core support upper portion 3 which extends in a lateral direction of the vehicle body, a radiator core support lower portion 4 which is arranged parallel with the upper portion 3, right and left radiator core support side portions 5 and 5 which connect both end portions of the upper portion 3 and lower portion 4 with each other, and a shroud portion 6 which projects toward an inner side of the vehicle body from the upper portion 3, the lower portion 4, and the side portions 5 and 5. The radiator core support 1 is made of plastic material to be integrally formed.

In addition, in upper end portions of the right and left side portions 5 and 5, opening portions 7a and 7b are formed so as to allow connection, from a rear side of the motor vehicle, of an air intake duct of a not-shown engine, an air intake duct of a not-shown air conditioner, or others therethrough, and a through hole 8 is formed in the proximity of the opening portion 7a in a rectangular shape extending in a vertical direction of the motor vehicle.
Further, on intermediate portions of the right and left side portions 5 and 5, right and left head lamp stays 9 and 9 are provided, respectively, so that they project in a lateral direction of the vehicle body.
Further, on left and right upper surfaces of the lower portion 4, left and right fixing holes 4a and 4a are provided.
Incidentally, the whole of the radiator core support 1 may be made of metal instead of plastic material, or a part of the support 1 may be made of metal and the rest may be residually molded out of plastic material.

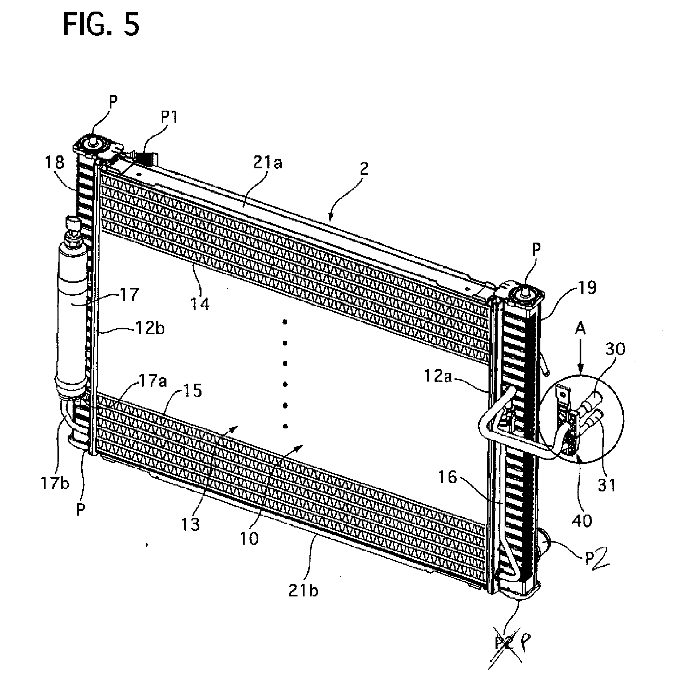

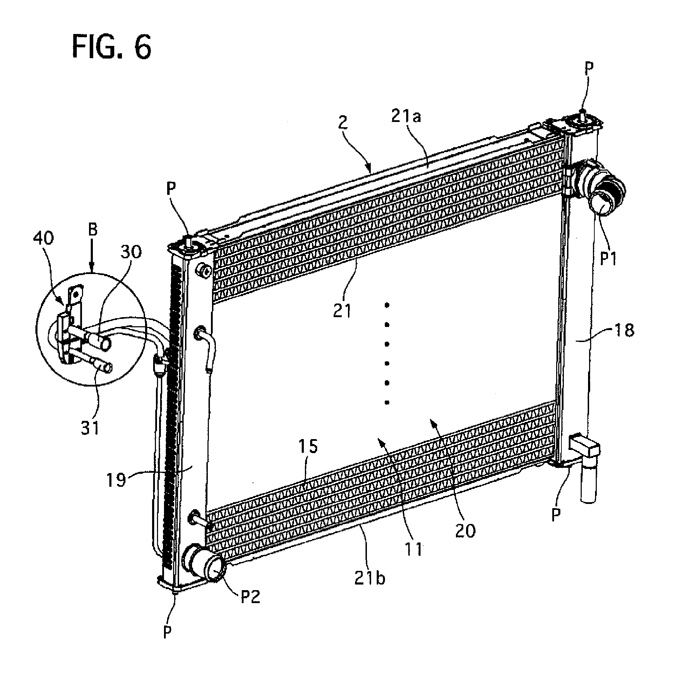

As shown in FIG. 5 and FIG. 6, the condenser 10 and the radiator 11 constitute the integrated heat exchanger 2 so that the radiator 11 is arranged at a rear side of the condenser 10.
The condenser 10 has a pair of condenser tanks, namely a first condenser tank 12a and a second condenser tank 12b, and a condenser core part 13 which is arranged between the first and second condenser tanks 12a and 12b.
The condenser core part 13 has a plurality of tubes 14 and a plurality of fins 15, where both end portions of the tubes 14 are inserted in and secured to their corresponding first and second condenser tanks 12a and 12b, respectively, and the fins 15 and the tubes 14 are alternately arranged to each other.

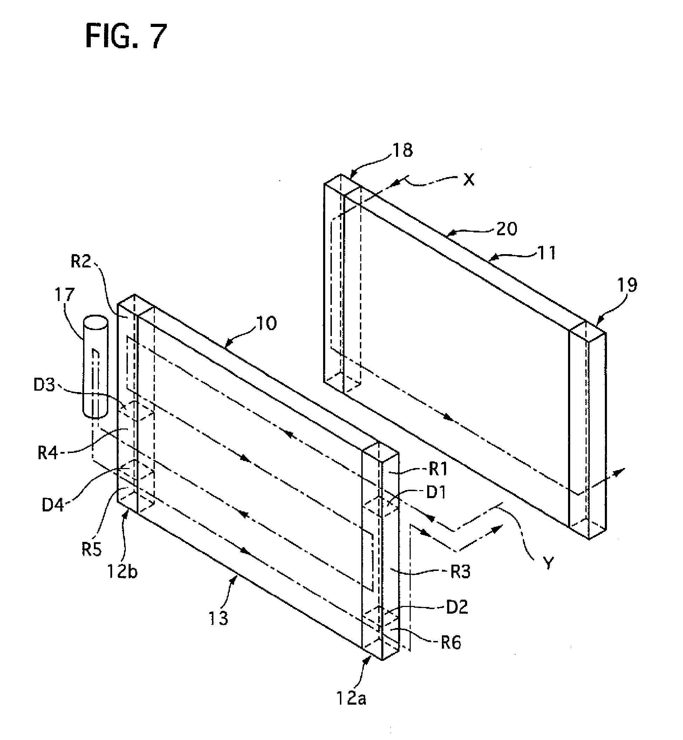

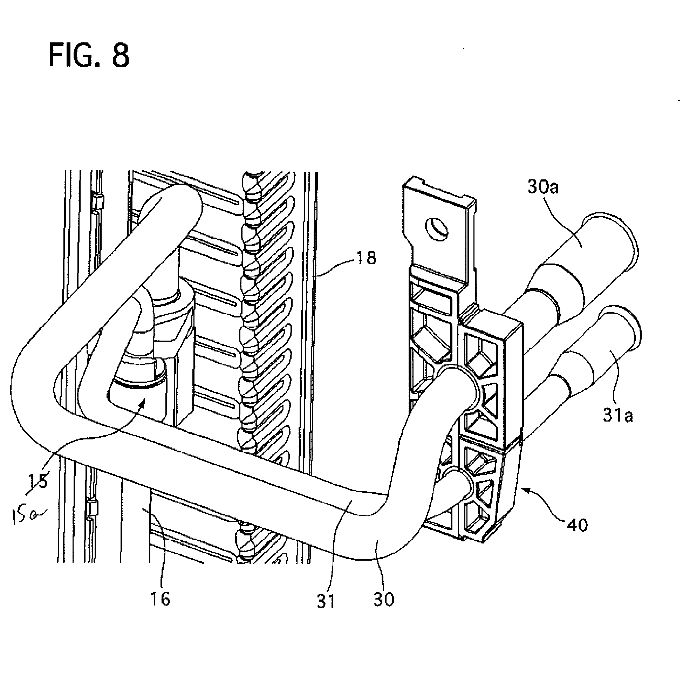

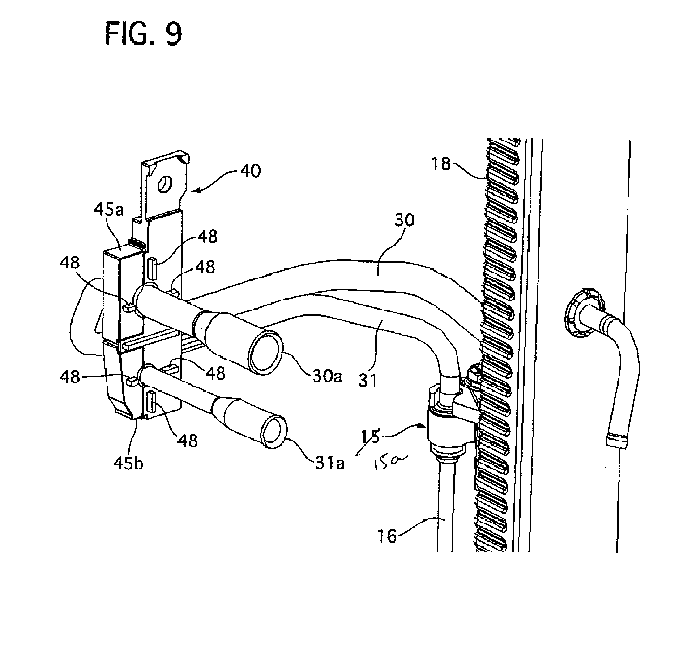

As shown in FIG. 7, an inner space of the first condenser tank 12a of the condenser 10 is divided by a first partition plate D1 and a second partition plate D2 to form three chambers, namely a first chamber R1, a third chamber R3 and a sixth chamber R6, therein. In addition, as shown in FIG. 8 and FIG. 9, a first pipe 30 is provided so that it can be fluidically communicated with the first chamber R1 through a connector 15, and similarly a second pipe 31 is provided so that it can be fluidically communicated with the sixth chamber R6 through the connector 15a and a connecting pipe 16.
On the other hand, an inner space of the second condenser tank 12b is also divided by a third partition plate D3 and a fourth partition plate D4 to form three chambers, namely a second chamber R2, a fourth chamber R4 and a fifth chamber R5, therein. In addition, a receiver 17 is provided so that it can be fluidically communicated with the fourth and fifth chambers R4 and R5 through a first connecting pipe 17a and a second connecting pipe 17b, which are shown in FIG. 5.

The radiator 11 has a pair of radiator tanks, namely a first radiator tank 18 and a second radiator tank 19, and a radiator core part 20 which is arranged between the first and second radiator tanks 18 and 19.
On an upper rear surface of the first radiator tank 18, an inlet port P1 is provided so that it can be fluidically communicated with an interior of the first radiator tank 18, while, on a lower rear surface of the second radiator tank 19, an outlet port P2 is provided so that it can be fluidically communicated with an interior of the second radiator tank 19.
The radiator core part 20 has a plurality of tubes 21 and the plurality of fins 15, where both end portions of the tubes 21 are inserted in and secured to their corresponding first and second radiator tanks 18 and 19, respectively, and the fins 15 are used for both the radiator 11 and the condenser 10, the tubes 21 and the fins 15 being arranged alternately to each other. Incidentally, the fins 15 do not need to be formed with both the condenser 10 and the radiator 11, and they may be separated therefrom.

In the integrated heat exchanger 2, a pair of reinforcements 21a and 21b is inserted in and secured to the first and second condenser tanks 12a and 12b and the first and second radiator tanks 18 and 19, so that the condenser core part 13 and the radiator core part 20 are connected with each other to be reinforced.
On right, left, top and bottom portions of the integrated heat exchangers 2, mounting pins P are provided, respectively, projecting vertically for mounting the heat exchangers 2 on the radiator core support 1.

As shown in FIG. 8 and FIG. 9, the first and second pipes 30 and 31 are laid so that they are bent to have a substantial U-shape so that their intermediate portions project forward and their end portions are projected rearward. Their end portions are clamped by a bracket 40 at their portions in the vicinity of first and second vehicle-side connecting end portions 30a and 30b.

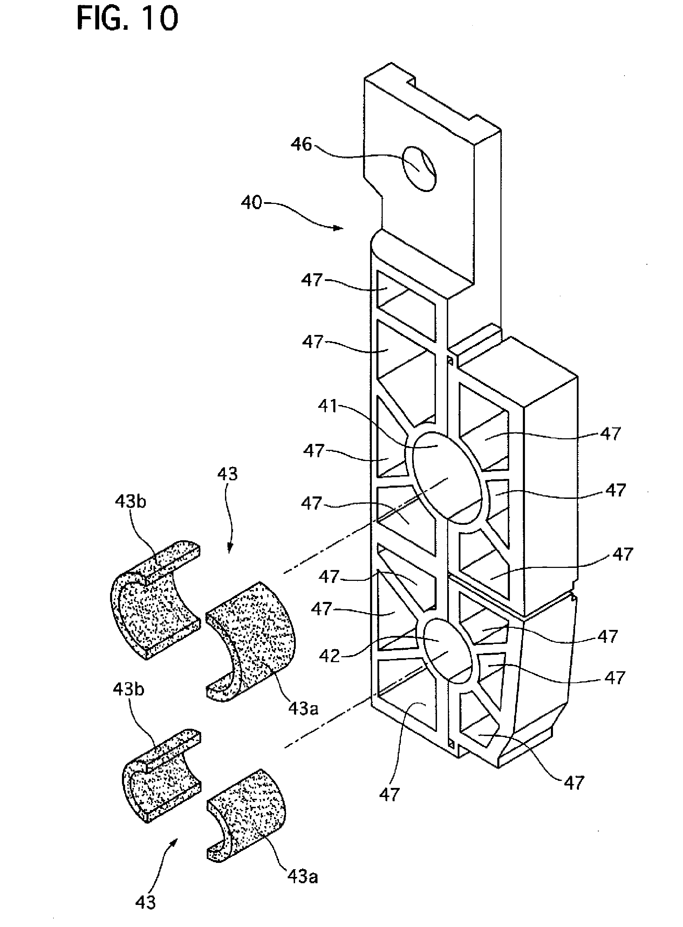

As shown in FIG. 10, the bracket 40 is made of a plastic plate to have dimensions enough to block off the through-hole 8 formed on the radiator core support 1. The bracket 40 is formed at its substantially middle portion with a first through-hole 41 and a second through-hole 42, which are vertically apart from each other and are slightly larger in diameter than external diameters of their corresponding piping consisting of a first pipe 30 and a second pipe 31. The first and second through-holes 41 and 42 are adhesively fitted in with first and second elastic members 43, respectively. Each of the first and second elastic members 43 consists of two divided body portions 43a and 43b each having a semi-cylinder shape. Although the elastic body members 43 are made of rubber in the embodiment, they may use other elastic materials. In addition, the elastic members 43 are dispensable, the diameters of the first and second through-holes 41 and 42 may be set to be substantially equal to the external diameters of the first and second pipes 30 and 31.

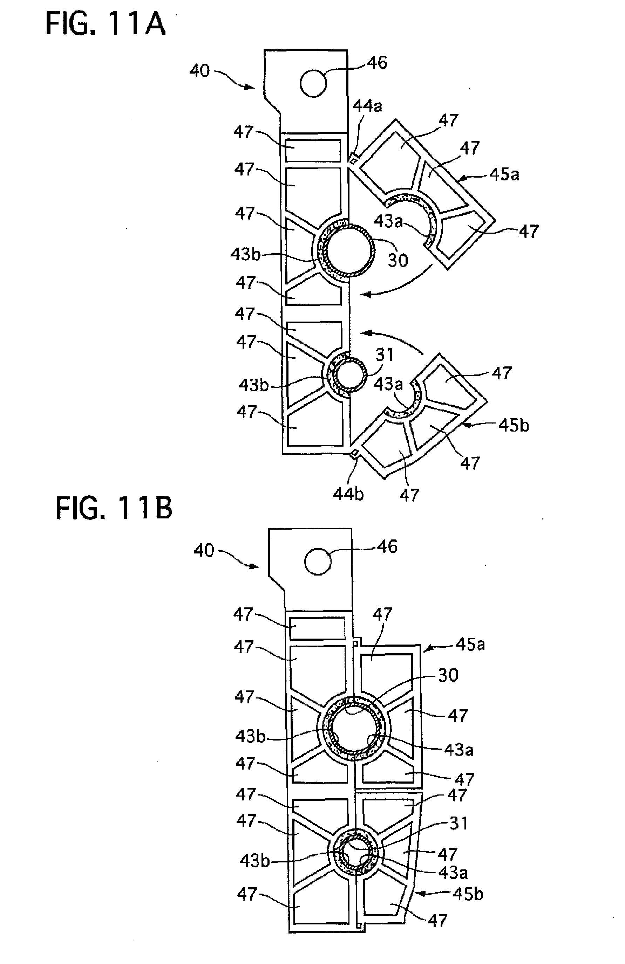

As shown in FIG. 11A, the bracket 40 has two turning portions 45a and 45b, where they have thin-walled hinge portions 44a and 45b which connect the divided body portions 43a and 44b so as to turn them in open-and-closed directions. Therefore, the bracket 40 can be attached to the first and second pipes 30 and 31 by placing the vehicle-side connecting end portions 30a and 31 a of the first and second pipes 30 and 31 at the inner side of the divided body portion 43b in an open state of the turning portions 45a and 45b and then by closing them. In this closed state thereof, the first and second pipes 30 and 31 contact with the elastic members 43 with no gap therebetween.

In addition, the bracket 40 is formed at its top portion with a fixing hole 46 having a circular shape, and it is also formed at its different positions with a plurality of draft depressions 47 with the aim of weight saving. Specifically, the bracket 40 is formed so that it has a plurality of ribs radially extending toward an outer circumferential frame portion of the bracket 40 from a supporting portion formed with the through-holes 41 and 42 through which the first and second pipes 30 and 31 pass.
Further, as shown in FIG. 9, on rear sides and circumferences of the turning portions 45a and 45b of the bracket 40, a plurality of projecting portions 48 are formed to extend outwardly.

Next, the operation of the radiator core support 1 of the embodiment will be described.
In order to mount the thus constructed integrated heat exchangers 2 on the radiator core support 1, firstly, the integrated heat exchangers 2 attached with the bracket 40 are brought and inserted in an oblique direction from the front side of the motor vehicle, and then its vehicle-mounting pins P, which are provided on the right and left bottom portions of the integrated heat exchangers 2, are inserted into the corresponding fixing holes 4a of the radiator core support lower portion 4a through not-shown mounting rubbers.

Next, the integrated heat exchangers 2 are rotated rearward to rise, and then, in this rising state, the vehicle-mounting pins P, which are provided on the right and left top portions of the integrated heat exchanger 2, are secured to the radiator core support upper portion 3 through not-shown mounting rubbers and brackets.
In this rising process, the first and second pipes 30 and 31 are allowed to be rotated and they are prevented from being contacted with rims around the through-hole 8, because the through-hole 8, through which the vehicle-side connecting end portions 30a and 31a of the first and second pipes 30 and 31 are to be passed, are formed to be an elongate hole vertically extending.

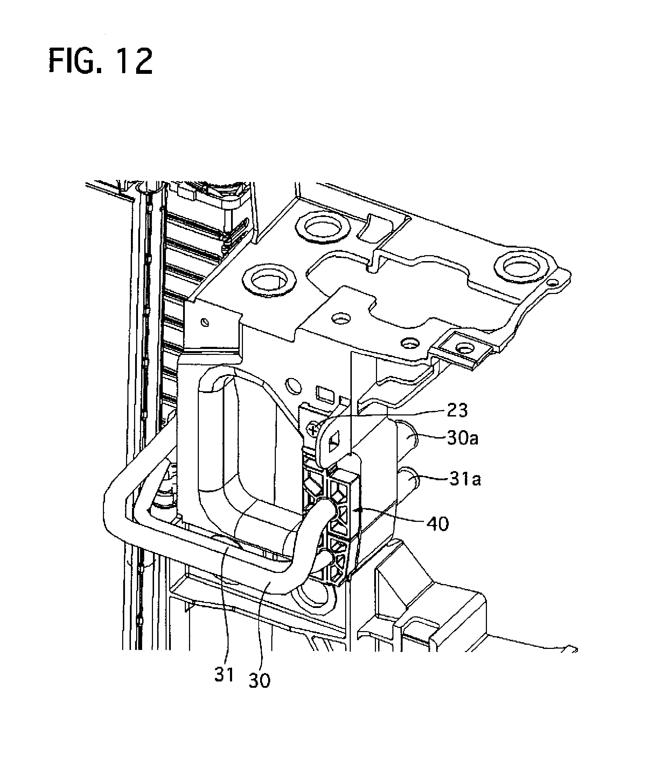

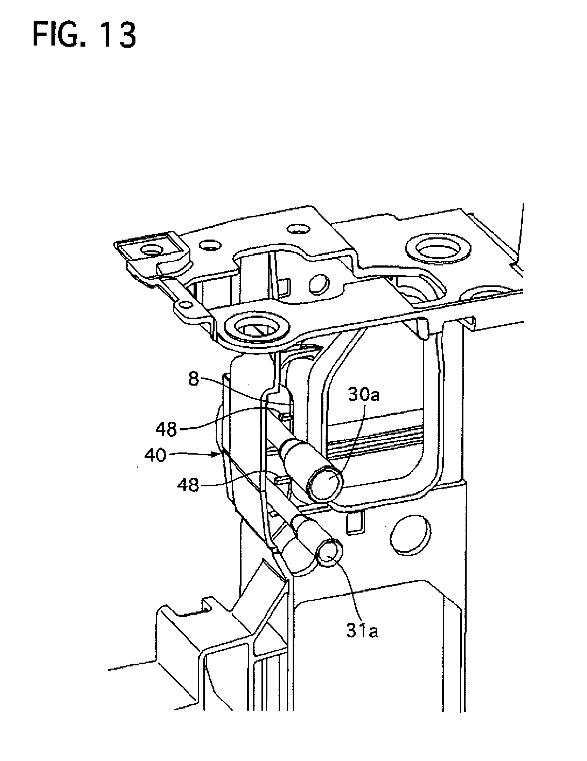

Next, as shown in FIG. 12, the bracket 40 is secured to the radiator core support 1 by inserting screws 23 into screw holes 22 of the radiator core support 1, as shown in FIG. 3, through the fixing hole 46 of the bracket 40 and tightening the screws 23. Incidentally, the bracket 40 may be secured by a clip, a bolt, of the like instead of using the screw 23.
In this securing state of the bracket 40, gaps, which are formed between the through-hole 8 and the first pipe 30 and between the through-hole 8 and the second pipe 31, remain blocked off. In addition, as shown in FIG. 13, the projecting portions 48, which are formed on the rear surface of the bracket 40, are contacted with the rim of the through-hole 8, thereby keeping the turning portions 45a and 45b in the closed state.
Consequently, the vehicle-side connecting end portions 30a and 31 of the first and second pipes 30 and 31 are projected rearward through the bracket 40, in a state where they are elastically supported by the bracket 40 through the elastic members 43, respectively.

The thus constructed radiator core support 1 is mounted on the motor vehicle, being provided with two not-shown motor fans which face the openings 01 and 02, respectively, and also being equipped with peripheral parts at various positions thereof.

Then the vehicle-side connecting end portions 30a and 30b of the first and second pipes 30 and 31 of the condenser 10 are connected with connecting pipes of the vehicle-side devices, respectively, and the inlet and outlet ports P1 and P2 of the radiator 11 are connected with engine-side connecting pipes, respectively.
Specifically, the vehicle-side connecting end portion 30a of the first pipe 30 is connected with a connecting pipe of a not-shown compressor, and the vehicle-side connecting end portion 31 a of the second pipe 31 is connected with a connecting pipe of a not-shown evaporator.
In this connecting process, the vehicle-side connecting end portions 30a and 31a of the pipes 30 and 31 are secured and supported by the bracket 40 in the vicinities thereof. Therefore, this structure increases in stiffness, and accordingly they can be stably and easily connected with the vehicle-side connecting pipes without a bumpy movement in the connecting process.

As shown in FIG. 7, the radiator 11 functions in such a way that circulating medium X flows into the first radiator tank 18 from the engine side through the inlet port P1 at a temperature of approximately 110 °C, and then it is cooled down to a temperature of approximately 60 °C due to heat exchange through the fins 15 between the circulating medium X and air flow generated by vehicle running or by the fans while it flows through the tubes 21 of the core part 20. Then the circulating medium X is discharged through the outlet port P2 to flow into the second radiator tank 19.

On the other hand, in the condenser 10, circulating medium Y flows into the first chamber R1 of the first condenser tank 12a through the first pipe 30 and the connector 15 from the compressor side at a temperature of approximately 70 °C, and then a heat-exchange occurs, through the fin 15, between the circulating medium Y and the air flow generated by the vehicle running or by the fans while the circulating medium flows through the tubes 14 which connect the first and second rooms R1 and R2 of the first and second tanks 12a and 12b with each other. Then it flows into the second room R2 of the second condenser tank 12b.

The circulating medium Y that has entered the second room R2 flows through the tubes 14, which connect the second room R2 and the third room R3, to enter the third room R3 of the first condenser tank 12a. Then the circulating medium Y in the third room R3 enters the fourth room R4 of the second condenser tank 12b through the tubes 14 which connect the third and fourth rooms R3 and R4 with each other, where it is cooled down due to the heat exchange between the circulating medium Y and the air flow generated by the vehicle running or by the fans while it flows therethrough. The circulating medium Y flows into the fourth room R4 of the second condenser tank 12b.

The circulating medium Y in the fourth room R4 is introduced through the first connecting pipe 17a to the receiver 17, where it is separated into gas and liquid, and then it enters the fifth room R5 through the second connecting pipe 17b. The circulating medium Y in the fifth room R5 is cooled down to a temperature of approximately 45 °C due to the heat exchange between the circulating medium Y and the air flow generated by the vehicle running or by the fans while it flows therethrough. The circulating medium Y flows into the sixth room R6 of the first condenser tank 12a.
Finally, the circulating medium Y in the sixth room R6 is discharged to the not-shown evaporator through the connecting pipe 16, the connector 15, and the pipe 31, fulfilling the function of the condenser.

As described above, the gaps formed between the through-holes 8 of the radiator core support 1 and the pipes 30 and 31 are blocked off by the bracket. Hot air does not blow back from the engine side to the front side of the integrated heat exchangers 2, which inhibits deterioration of the coolability thereof.

Further, the integrated heat exchangers 2, including the condenser 10, are softly mounted on the radiator core support 1. In the embodiment, since the pipes 30 and 31 are elastically supported by the bracket 40 through the elastic members 43, respectively, vibrations of the pipes 30 and 31 are absorbed. Therefore, they are in no danger of disadvantageous effects thereon due to the vibrations.

Further, this structure prevents the bracket 40 and the pipes 30 and 31 from being contacted with each other to generate contact noise, and it prevents the bracket 40 from being cracked and/or destroyed.

Next, the advantages of the radiator core support of the embodiment will be described.
As described above, in a pipe supporting structure of the condenser 10 according to the embodiment, the radiator core support is constructed in such a way that the condenser 10 is mounted on the front side of the radiator core support 1 and the vehicle-side connecting end portions 30a and 31 a of the pipes 30 and 31 of the condenser 10 are laid so that they pass through the through-hole 8 formed on the radiator core support in the state where they project rearward. It is provided with the bracket 40 which is capable of supporting the pipes 30 and 31 in the state where the gaps formed between the pipes 30 and 31 and the through-hole 8 are blocked off. This enables the vehicle-side connecting end portions 30a and 31 a of the pipes 30 and 31 of the condenser 10 to be easily connected with the vehicle side device, preventing the hot air from blowing back from the engine side to the front side of the condenser 10 through the gaps formed between the pipes 30 and 31 and the through-hole 8.

In addition, the pipes 30 and 31 are elastically supported by the bracket 40,

The invention is not limited to the embodiment described above. Design changes and modifications are considered to be within the invention as long as they are within the spirit and the scope of the invention.
For example, the bracket 40 and the elastic member 43 are appropriately determined in their material and configurations of specific portions.
In addition, in the integrated heat exchangers 2 of the described embodiment, the condenser 10 is integrally formed with the radiator 11, while they may be arranged in such a way that they are constructed to be separated from each other.
Further, in the described embodiment, the pipes 30 and 31 of the condenser 10 are laid in a state where they pass through the through-hole 8 in the embodiment, while the pipes 30 and 31 are not limited to passing through the same through-hole, and they may be set to pass through separated through-holes, respectively.

### [INDUSTRIAL APPLICABILITY]

The invention is suitable for providing a radiator core support in which a pipe of a condenser passes therethrough.

## Claims

1. A radiator core support in which a condenser is arranged on a front side of the radiator core support and in which a vehicle side connecting end portion of a piping of the condenser passes through a through-hole formed on the radiator core support in a state where the end portion is projected rearward therethrough, the radiator core support being **characterized in that** it is provided with a bracket which is capable of holding the piping in a state where the bracket blocks off a gap formed between the piping and the through-hole.

2. The radiator core support according to claim 1, wherein
the bracket is elastically supported by the piping.

3. The radiator core support according to claim 1 or claim 2, wherein
the piping has two pipes, and wherein
the bracket is formed so that an upper portion of the bracket is turnable around an upper end portion thereof so as to open for allowing one pipe of the piping to be inserted from a lower side, and so that a lower portion of the bracket is turnable around a lower end portion thereof so as to open for allowing the other pipe of the piping to be inserted from an upper side.

4. The radiator core support according to any one of claims 1 to 3, wherein the bracket has a plurality of ribs which extend radially from a supporting portion forming the through-hole, through which the piping passes, to an outer circumferential frame portion of the bracket.
